# EUROPÄISCHE PATENTANMELDUNG

(11) **EP 2 390 118 A1**
(43) Veröffentlichungstag der Anmeldung: **30.11.2011**
(21) Anmeldenummer: 11450067.1
(22) Anmeldetag: 24.05.2011
(51) Int. Cl.: B60C 27/10

(54) **Verschluss und Spannelement zur Montage, permanenten Spannung und Selbstdemontage einer Schneekette auf einem Fahrzeugrad**

(30) Priorität: 26.05.2010 AT 8562010
(71) Anmelder: Wolf, Josef Franz, 5621 St. Veit/PG (AT)
(72) Erfinder: Wolf, Josef Franz, 5621 St. Veit/PG (AT)

(57) **Zusammenfassung**

Es ist ein vorgesehenes Zusammenwirken des Spannelements (8) an der Vorderseite der Schneekette (A) mit dem an der Rückseite des Fahrzeugrades (B) die beiden Seilenden der Schneekette (A) verbindenden Verschluß (7) wobei das Spannelement (8) permanent eine Zugkraft auf beide Seiten der Schneekette (A) ausübt, diese dauerhaft während der Radbewegung spannt, damit bewirkt daß sich der Hacken (1) von Zapfen (5) und Mitnehmer (6) des Hebels (2) am Verschluß (7) nicht ungewollt lösen kann und nach bewußter Öffnung des Hebels (2) unter Spannlast und Freigabe des Hackens (1) dieses Spannelement (8) die Schneekette (A) vorne neben das Fahrzeugrad (B) demontiert. Die Erfindung betrifft eine Schneekette (A), dadurch gekennzeichnet daß am Verschluß (7) weiters ein Hebel (2) vorgesehen ist der zwischen einer ersten und einer zweiten Stellung schwenkbar ist und einen Mitnehmer (6) aufweist, der einen Hacken (1) in der ersten Stellung sichert und in seiner zweiten Stellung löst.

## Beschreibung

Die Erfindung betrifft eine Schneekette mit einem vorderen Spannelement und einen Verschluß am hinteren Seilstrang der Schneekette, wobei im Verschluß ein Zapfen vorgesehen ist, sowie ein Hacken der in den Zapfen eingreift.

In einer Situation wo Schneeketten auf Fahrzeugräder aufgezogen werden müssen, sollte dieser Vorgang so kurz wie möglich ablaufen. Bei einer Anzahl bekannter Schneeketten bringt die Montage und Demontage eine Vielzahl von Handgriffen mit sich die eine solche Möglichkeit nicht ergeben. Einige dieser Schneeketten müssen zur Montage um das Fahrzeugrad herumgezogen werden, was oft zur Folge hat daß sich Schneekettenteile zwischen Boden und Fahrfläche des Fahrzeugrades verklemmen. Nach erfolgter Zusammenführung der rückwärtigen und der vorderen Schneekettenteile, wird eine vordere Spannkette meist mit einem Gummi Zwischenstück geschlossen.Das hat wiederum zur Folge daß diese Spannkette nach kurzer Fahrt nachgespannt werden muß. Da jede Schneekette aber während der Fahrtsich in das Profil der Reifen absetzt und dadurch wieder locker wird müßte sie mehrmals nachgespannt werden. EP1355792, DE 4005048 C2, EP 1480843 und einige andere ähnliche Patente, welche alle voraussetzen daß die Schneekette nach der Fahrt in irgendeiner, mehr oder weniger umständlichen Art und Weise von Hand demontiert bzw.vom Fahrzeugrad gezogen werden muß.

Die mehr oder minder unangenehme Arbeit,eine Schneekette der bekannten Art vor und nach einem Einsatz zu montieren oder demontieren, wird von der Erfindung in der Weise vermieden daß ein Montagebügel Verwendung findet der ein verklemmen von Schneekettenteilen zwischen Boden und Fahrfläche eines Fahrzeugrades dadurch verhindert, daß die Schneekette in einem größeren Radius hinter das Fahrzeugrad gezogen wird. Nach dem Zusammenfügen des Verschlusses am hinteren Seilstrang der Schneekette und schließen der vorderen Spannkette wird das Spannelement in diese eingesetzt. Dieser Vorgang dauert drei bis vier Minuten, danach ist das Fahrzeug fahrbereit und die Schneekette bleibt während der ganzen Fahrt eng an den Reifen gezogen. Die Demontage erfolgt durch Öffnen des Verschlusses mit dem Öffnungsbügel in sekundenschnelle ohne die Schneekette selbst berühren zu müssen.

Die Aufgabe wird durch die Erfindung so gelöst, daß am Verschluß ein Hebel vorgesehen ist, der zwischen einer ersten und einer zweiten Stellung schwenkbar ist und einen Mitnehmer aufweist der einen Hacken in der ersten Stellung sichert und in seiner zweiten Stellung löst.

Zufolge dieser Konstruktionsmerkmale ist es möglich eine Schneekette in Zusammenwirken mit einem Spannelement derartig und permanent mit der Fahrfläche eines Fahrzeugrades zu verbinden, daß sowohl eine Lockerung der Schneekette als auch eine ungewollte Öffnung des Verschlusses während der Fahrt durch diese Dauerspannung verhindert wird,wobei der o.a. Hebel an seinem vorderen Ende eine nach unten offene Biegung in Form eines 180° gedrehten U aufweist die einen Öffnungsbügel aufnehmen kann.

In den Zeichnungen sind die Erfindungsgegenstände beispielsweise dargestellt.

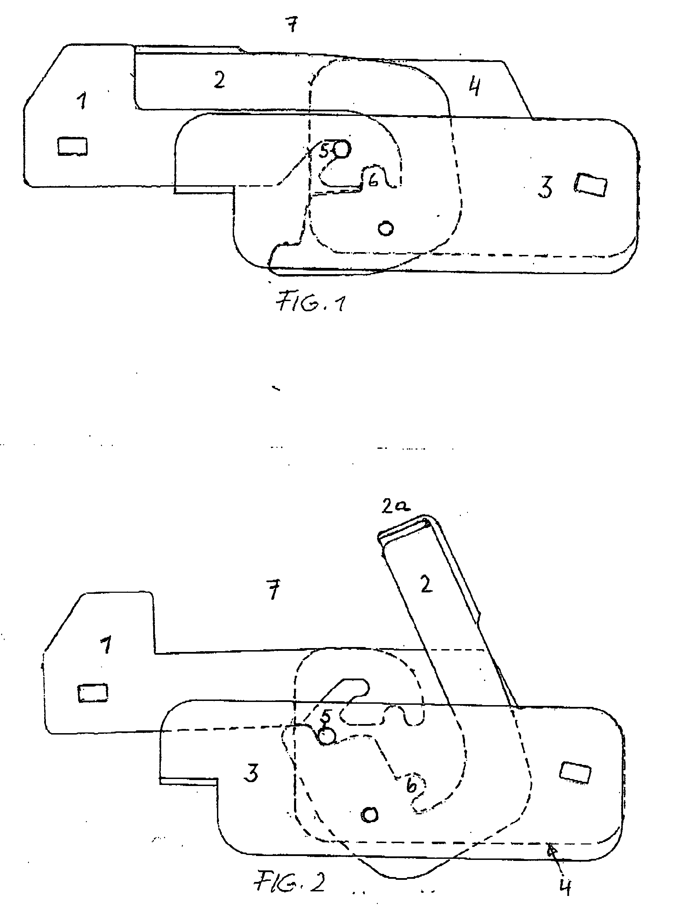

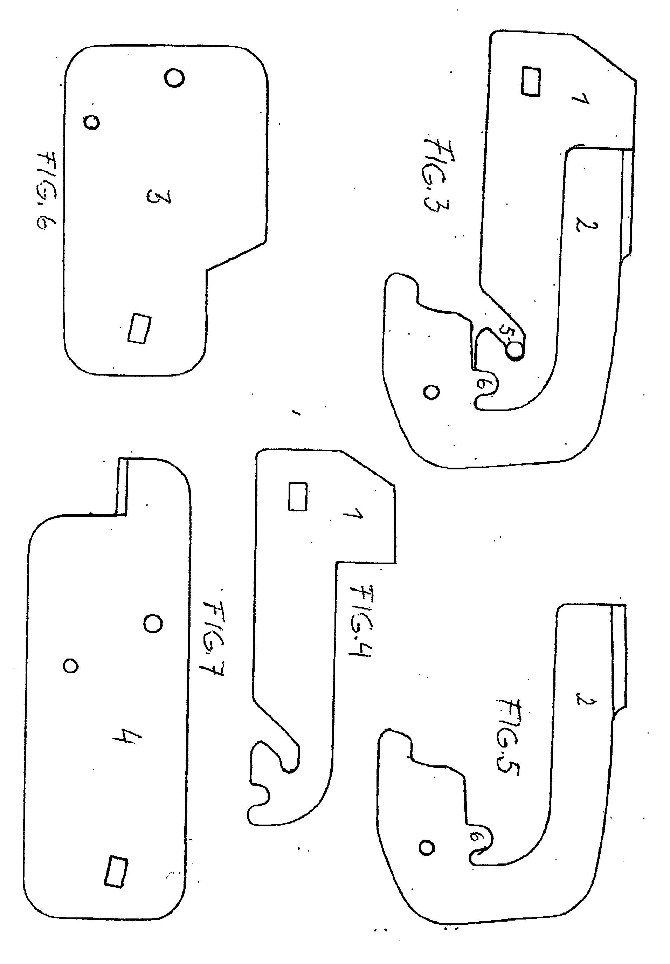

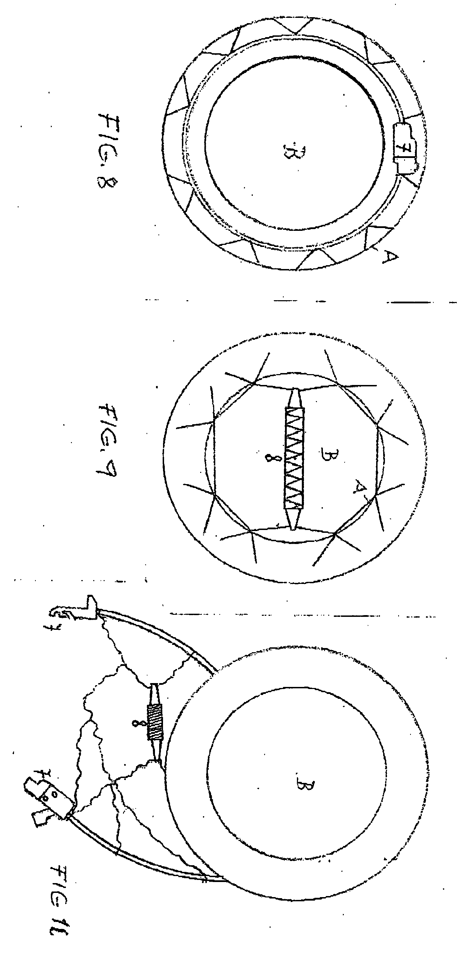

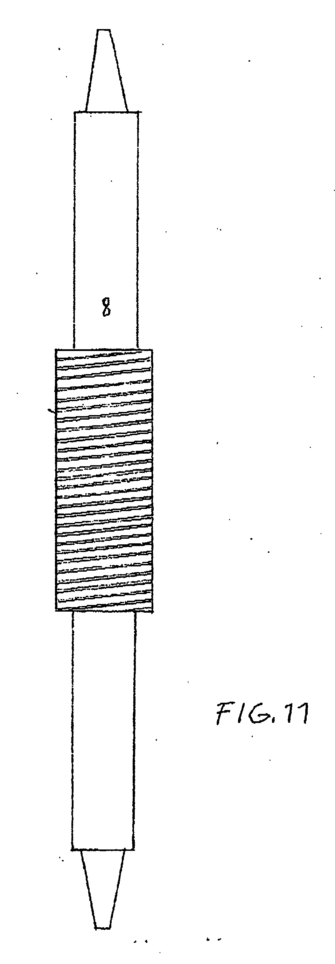

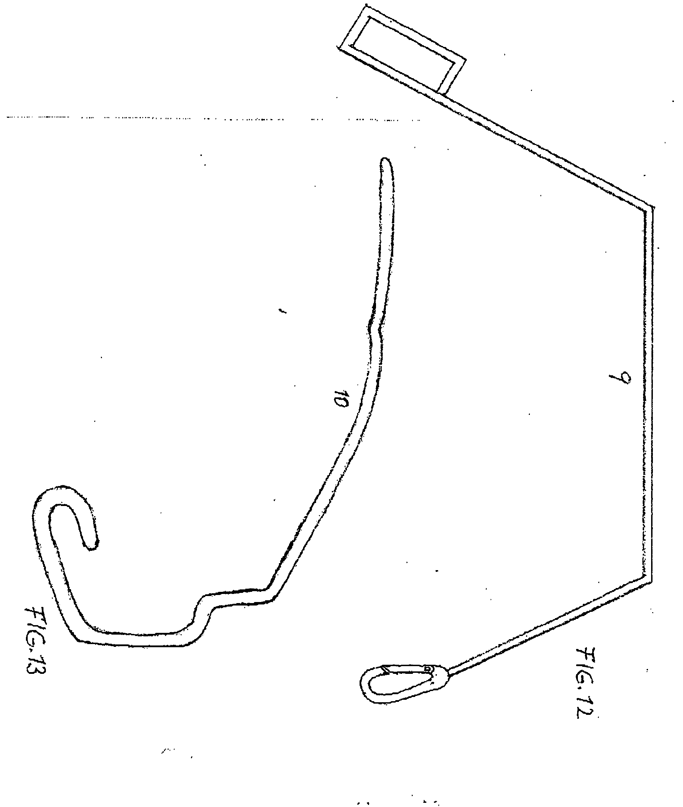

Fig. 1 - 7 zeigen den Verschluß zusammenmontiert und in Einzelteilen, Fig. 8 - 10 die Schneekette auf einem Fahrzeugrad montiert bzw. demontiert, Fig. 11 das Spannelement Fig. 12 und 13 Montagebügel bzw. Öffnungsbügel.

Fig. 1 zeigt den Verschluß 7 mit den gekennzeichneten Teilen Hacken 1 Hebel 2 Zapfen 5 Mitnehmer 6 sowie die Seitenteile 3 und 4. In Fig. 2 ist der durch den Öffnungsbügel geöffnete nach rechts geschwenkte Hebel 2 mit dem Mitnehmer 6 zu sehen, der den Hacken 1 aus dem Zapfen 5 gezogen hat und weiters die nach unten offene Biegung 2a in Form eines 180° gedrehten U, die den o.a. Öffnungsbügel aufnehmen kann, sowie die beiden Seitenteile 3 und 4 des Verschlusses 7 dargestellt. In Fig. 3 ist der Hacken 1 im Zapfen 5 und im Mitnehmer 6 des Hebel 2 verankert. In Fig. 4 und Fig. 5 sind die Einzelteile Hacken 1 und Hebel 2 mit dem Mitnehmer 6, getrennt dargestellt. Fig. 6 und Fig. 7 sind die Seitenteile 3 und 4 des Verschlusses 7. In Fig. 8 ist die Rückseite eines Fahrzeugrades B mit einer montierten Schneekette zu sehen, deren Seilstrang durch den Verschluß 7 verbunden ist. In Fig. 9 ist das in die Schneekette A an der Vorderseite des Rades B eingesetzte Spannelement 8 zu sehen. In Fig. 10 ist die Auswirkung der Verschlußöffnung dargestellt. Die Schneekette A wurde durch die Zugkraft des Spannelements 8 in sekundenschnelle neben das Fahrzeugrad B demontiert. Fig. 11 zeigt das Spannelement 8, Fig. 12 den Montagebügel 9 und Fig. 13 den Öffnungsbügel 10.

## Patentansprüche

1. Schneekette (A) mit einem vorderen Spannelement (8) und einem Verschluß (7) am hinteren Seilstrang der Schneekette (A), wobei im Verschluß (7) ein Zapfen (5) vorgesehen ist sowie ein Hacken (1) der in den Zapfen (5) eingreift,**dadurch gekennzeichnet daß** am Verschluß (7) weiters ein Hebel (2) vorgesehen ist, der zwischen einer ersten und einer zweiten Stellung schwenkbar ist und einen Mitnehmer (6) aufweist der den Hacken (1) in der ersten Stellung sichert und in seiner zweiten Stellung löst.

2. Schneekette nach Anspruch 1, **dadurch gekennzeichnet daß** der Hebel (2) an seinem vorderen Ende (2a) eine nach unten offene Biegung in Form eines 180° gedrehten U aufweist die einen Öffnungsbügel aufnehmen kann.
